# EUROPEAN PATENT APPLICATION

(11) **EP 2 667 343 A1**
(43) Date of publication of application: **27.11.2013**
(21) Application number: 12425098.6
(22) Date of filing: 24.05.2012
(51) Int. Cl.: G06Q 20/32, G06Q 20/42

(54) **Method for managing an authorization of a financial transaction request**

(71) Applicant: Petta, Stefano, 07026 Olbia (IT); Petta, Fabio Giovanni Forese, 07026 Olbia (IT)
(72) Inventor: Petta, Stefano, 07026 Olbia (IT); Petta, Fabio Giovanni Forese, 07026 Olbia (IT)
(74) Representative: Romano, Giuseppe

(57) **Abstract**

The present invention refers to a method for managing an authorization of a financial transaction request by a user via an authorizing body, and to an apparatus implementing said method.

## Description

The present invention refers to a method for managing an authorization of a financial transaction request by a user via an authorizing body and an apparatus implementing said method.

When a financial transaction is carried out with telematic data transmission tools via , all personal information, the credit card data, the current account number, transit on servers having security systems which ensure maintenance of the standards defined by international banking circuits.

All data are cryptographed, generally with methods of asymmetric public cryptography (e.g. RSA), based on mathematical functions with which an encoding is quickly obtained, but having a reverse decoding function vulnerable to attack only by availing oneself of very long times (decades), or when knowing numbers held by the message addressee only. Protection by current algorithms seems therefore inviolable. However, no algorithm is capable of protecting against a user's carelessness and unwise use of the Internet and cards.

To limit the possibility of fraud, in the known state of the art there are currently described various contrivances aimed just at protecting financial transaction operations carried out by the user. Among these contrivances fall, e.g., the CVV and CVD (Card Verification Value and Card Verification Code) security codes, and the Securecode and Verified by VISA services. In particular, this service consists in the registration of a single personal password that, associated to the user's credit card, will be requested for any purchase the user might wish to carry out. Subsequently, the card issuer will check the card matching with the password, and therefore in the final analysis with the user; only after such a checking the issuer will allow or not allow the transaction. One of the drawbacks associated to the known systems is that they envisage the inputting of a password, necessarily by using a computer, and therefore cannot be used for card withdrawals or POS payments. A further known system is the "SMS Alert" one, consisting in a sending of an SMS (Short Message Service) to the user each time an operation has been carried out with the user's credit card, therefore only after the transaction has been carried out.

However, these systems entail numerous drawbacks which do not allow the user to obtain a specific checking and a high security of financial transactions. In particular, these drawbacks lie, e.g., in the loss or theft of credit/ATM cards with the related security codes, oft-times kept in the same document holder. In this case, CVV and CDV codes or the card ID code are totally ineffective. Another drawback is the possibility of a code recording by persons to whom the card has been entrusted for a payment, as may happen, e.g., while paying the bill at commercial or catering businesses . Again, quite common is a card cloning or duplication, e.g. by applying a memory-fitted keyboard over that of ATM booths, in which the pressure of a user's fingers on the keys allows a sending of the right security code sequence to third parties.

Finally, also systems envisaging an alert message are scarcely secure, since the alert SMS arrives once the operation has been completed; therefore, they do not enable to prevent a transaction in a sufficiently timely way, allowing to defend oneself, by blocking the card itself, only after the transaction has occurred.

The aim of the present invention is to propose a novel and original solution to the drawbacks found in the known art and related to security systems for financial transactions.

A first object of the present description is therefore a method for managing an authorization of a financial transaction request by a user as defined by claim 1.

A second object of the present description is an apparatus for managing an authorization of a financial transaction request by a user implementing the above method, as defined by claim 9.

Preferred features of the objects of the present description are set forth in the dependent claims thereof.

In particular, the present description refers to a method for managing an authorization of a financial transaction request by a user, method which is characterised by a step of forwarding, by a phone line, data related to a financial transaction request by an authorizing body to a user's phone number, and to a step of waiting for a response message, on the same phone line, by the user, aimed at authorizing or not authorizing the transaction request. In other words, therefore, the method described herein is a method for recognizing a fraudulent financial transaction request by a user.

The main advantage of the method described herein is that the user is informed about a financial transaction request directly on a phone device connected to his/her personal phone number prior to the transaction being actually carried out, and that it is the user him/herself who allows the financial transaction by using just his/her phone device. This allows the user to check transaction-related data, like, e.g., amount, date and time of the same, and decide whether to proceed or not proceed to authorize the request. Thus, any financial transaction in which a credit/ATM card, virtual or not virtual, or a transfer is used is checked beforehand by the user directly on his/her phone device, before it actually occurs. In other words, the method described herein advantageously ensures a higher security to the user with regard to financial movements associated to his/her cards, since, even in case the credit/ATM card were lost or cloned, or, more generally, any time transactions are carried out with said card by unauthorized third parties, a request for authorizing the financial transaction is always forwarded directly to the user, by a phone line, transaction which is accepted only in case of an authorizing response message.

Further advantages, as well as the features and the operation steps of the present invention, will be made evident in the following detailed description related to possible embodiments thereof, given by way of example and not for limitative purposes. Reference will be made to the figures of the annexed drawings, wherein:
- Figure 1 shows a schematic depiction of the operation steps of an embodiment of the method described herein;

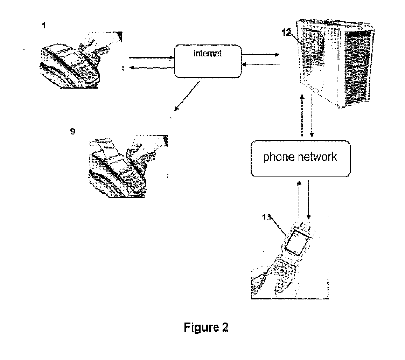

- Figure 2 shows an embodiment of an apparatus according to the present description.

Object of the present description is a method for managing an authorization of a financial transaction request by a user. In particular, the method described herein comprises a series of operation steps whose ultimate aim is that of obtaining from the user an authorization for allowing or not allowing a financial transaction, e.g., a money payment, transfer or withdrawal by his/her credit/ATM card. According to the method described herein, the financial transaction request 1 is forwarded to an authorizing body each time a cash movement is requested, e.g., from a current account of a given user by a credit/ATM card associated to said account. Therefore, merely by way of example, when a user carries out a purchase with his/her credit card, according to the method described herein, an authorization to payment is requested, even before than to the credit institution at which the user is a customer, to the user in person by said authorizing agency.

The financial transaction subject of the authorization request is identifiable by one or more specific data, hereinafter referred to as "first data". Merely by way of example, such first data may comprise transaction amount, date and/or time of transaction and/or transaction recipient, etc; however, any data, even a single data, allowing identification of the transaction for which authorization is requested may be used. In this perspective, the technician in the field will be able to establish the nature of said first data to the ends of the present invention, with no need to further delve into the matter herein.

The user mentioned in the present description is therefore a subject holder of the credit/ATM card, which may also be a virtual card, with which said financial transaction is carried out. Each specific user is associated to his/her own card by ID data (herein also referred to as "second data") such as, e.g., pins, ID codes, first name and/or surname of the user him/herself.

As already mentioned for the first data, also for the second ID data any information/data allowing to unequivocally identify the user may be used to the ends of the present invention.

In the method described herein, said first data and said second data are transmitted to the authorizing body. Such authorizing body may also be the same credit institution or authority managing the circuits of the user's cards.

Such second ID data of the user are associated, in a predefined and predefined database 3, managed by the authorizing body, to a phone number of said user, preferably a mobile network phone number.

In particular, the method described herein comprises a step of transmitting 2 said first data related to the financial transaction and of said second ID data to the authorizing body. Therefore, by way of example, when the user carries out a purchase with his/her credit card, the data consisting in the amount, date and time of purchase, concomitantly to the user's ID data such as first name, surname and ID code, are sent to the authorizing body.

Then, within the authorizing body it is extracted 4, by the predefined database 3, the phone number associated to said ID data, phone number corresponding, due to what has been mentioned above, to a personal number of the user who is carrying out the purchase. In an embodiment of the method, said first data and said second data are transmitted to a data centre comprised in the authorizing agency, which subsequently transmits said second ID data to a management system. In said management system the predefined database 3 is comprised, apt to extract the user's phone number associated to said second data.

Then, the authorizing body forwards 5, by a phone line, to the user's phone number the first data related to the financial transaction, therefore, e.g., the total amount, the date and time of purchase. In particular, the sending of said first data could occur in the form of an SMS, multimedia message or voice message/content addressed to the above phone number.

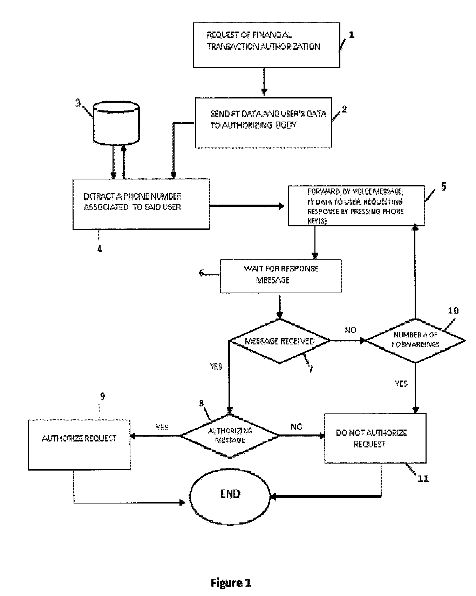

The sending of first data to the phone number forms, according to the method described herein, the request of financial transaction authorization. The request to the ends of the present invention could optionally also be formulated by sending, along with said first data, also a query related to the transaction request. Merely by way of example, the request might therefore be formulated by sending the total amount, date and time together with the query: "Authorize request?". Moreover, in the sending of the request to the user's phone number, the request might also comprise ID data, like, e.g., user's first name and surname. Upon sending the authorization request, the authorizing body will be waiting 6 for a response message by the user, response message 7 which will be sent, by the same phone line mentioned above, to the authorizing agency. In other words therefore, the message of request of authorization to the transaction and the response message occur within the same phone call and without line interruption. In a preferred embodiment of the invention, as shown in Figure 1, the user will authorize the transaction by using specific keys of the phone device in response to a voice phone message and without call disconnection. In practice, in this latter embodiment the operation steps comprise: transmission of first data, request, by voice message, of authorization to financial transaction, and user's response. The response message sent 8 can be of authorizing or non-authorizing type; in particular, by "authorizing message" in the present description it is meant any one type of response message having as ultimate aim that of consenting 9 to the financial transaction request. Vice versa, by "response message of non-authorizing type" it is meant any type of response message refusing the request to carry out the transaction. Therefore, in line with the example reported above and in a manner not limiting the invention, when the request is formulated by comprising the transaction amount, date and time, and the query "Authorize request?", an authorizing-type response message is a message answering affirmatively to the query; vice versa, a non-authorizing message is a message answering negatively to the query . Moreover, according to the method described herein, even the absence of reception of a response message, e.g. at the end of a timeout period or after a preset number of attempts 10, is interpreted as a non-authorizing message. Moreover, in case the sending of the first data occurs by voice message and the response message is by SMS, also a phone call disconnection between authorization request and response is interpreted as a non-authorizing message.

In general, therefore, the response message obtained by said phone number, and ultimately by said user, can authorize 9 or not authorize 11 the transaction request, according to whether, therefore, it is a response message of authorizing or non-authorizing type.

The nature of the response message may be in the form of an SMS, multimedia message, voice message, or carrying out of specific operations by a device associated to said phone number. Merely by way of a non-limiting example, said operations might consist in the pressing of specific keys of the device 13 associated to the user's number, operations which are interpreted, by means of a system for the decoding thereof by the authorizing agency, as an authorizing or non-authorizing message. In such a context, the method described herein may also comprise a step of checking said response message, step aimed at correctly grading it as authorizing or non-authorizing according to the decoding system used by the authorizing agency. Whatever the nature of the response message, to the ends of the present method the sending of the message to the authorizing body will occur by a phone line.

Subject of the present description is also an apparatus for authorizing a financial transaction request by a user capable of implementing the method described above. In particular, said apparatus comprises an authorizing body 12, which in turn comprises a service centre and a management system. The service centre and the management system are connected to each other by a local network.

The service centre is apt to receive both first data related to said financial transaction, and second ID data of the user. Said first data and second ID data are of the type described in the foregoing for the above method; hence, for greater clarity, reference is made thereto.

The management system comprises a predefined database apt to associate a phone number to the second ID data of the user. In other words, therefore, the database allows to trace whom the request of authorization to a financial transaction is to be forwarded to. To this end, the apparatus also comprises means for connecting 13 via a phone network the authorizing body to a user's phone device associated to said phone number. Preferably, the above phone network is a mobile network. In addition, with the method described herein also sensitive data of institutions and private companies can be protected, subordinating data access to an authorizing response message incoming from a phone device associated to a user in charge of security of the systems that are to be guarded.

The present invention has hereto been described with reference to preferred embodiments thereof. It is understood that other embodiments might exist, all falling within the concept of the same invention, and all comprised within the protective scope of the claims hereinafter.

## Claims

1. A method for managing an authorization of a financial transaction request by a user via an authorizing body, comprising the following steps:
- transmitting first data related to said financial transaction to said authorizing body,
- transmitting second ID data of said user to said authorizing body,
- extracting, by a predefined database, a phone number associated to said second ID data,
- forwarding, by a phone line, to said phone number said first data, requesting the sending of a response message;
- waiting for reception of the response message by said user on the same phone line, and
- authorizing said transaction request when said response message is authorizing; or
- not authorizing said transaction request when said response message is non-authorizing, or in the absence of reception of the response message.

2. The method according to claim 1, wherein said first data comprise transaction amount and/or end recipient of the transaction.

3. The method according to claim 1 or 2, wherein said second data comprise first name and/or surname of said user and/or an ID code thereof.

4. The method according to any one of the claims 1 to 3, further comprising a step of checking said response message and classifying it as authorizing or non-authorizing.

5. The method according to any one of the claims 1 to 4, wherein said phone line is a mobile network phone line.

6. The method according to any one of the claims 1 to 5, wherein the forwarding of said first data to the phone number occurs by an audio content.

7. An apparatus for managing an authorization of a financial transaction request by a user implementing the method according to any one of the claims 1 to 6, comprising
- an authorizing body, said body comprising
• a service centre apt to receive first data related to said financial transaction and second ID data of said user,
• a management system comprising a predefined database apt to associate a phone number to said second ID data of the user, wherein said service centre and said management system are connected by a local network;
- means for connecting said authorizing body, via a phone network, to a phone device of said user corresponding to said phone number.

8. The apparatus according to claim 7, wherein said phone is a mobile phone and said phone line is of a mobile network.
